# DEMANDE DE BREVET EUROPEEN

(11) **EP 3 211 193 A1**
(43) Date de publication de la demande: **30.08.2017**
(21) Numéro de dépôt: 17157469.2
(22) Date de dépôt: 22.02.2017
(51) Int. Cl.: F01P 3/18, F02B 29/04, F28D 1/04, F28F 9/00

(54) **INTERFACES DE REFROIDISSEMENT DE MOTEUR A COMBUSTION INTERNE**

(30) Priorité: 23.02.2016 FR 1651449
(71) Demandeur: Renault s.a.s, 92100 Boulogne-Billancourt (FR)
(72) Inventeur: GROSSETETE, Franck, 78640 NEAUPHLE LE CHATEAU (FR); FOYEN, Renaud, 27710 SAINT GEORGE MOTEL (FR)

(57) **Abrégé**

Agencement d'un refroidisseur de fluide réfrigérant (15) et d'un refroidisseur d'air de suralimentation (10) de moteur à combustion interne de véhicule automobile de forme sensiblement parallélépipédique disposés parallèlement l'un à l'autre selon une face latérale verticale (14,16), chacun des refroidisseurs (10, 15) comprenant au moins un connecteur d'entrée (11) et un connecteur de sortie de fluide (12),

Caractérisé en ce que le connecteur (18) du refroidisseur d'air de suralimentation (10) s'étend transversalement vers une face latérale du refroidisseur de fluide réfrigérant pour participer à la fixation du refroidisseur d'air (10) avec le refroidisseur de fluide (15).

## Description

### Domaine technique de l'invention

La présente invention concerne des moteurs à combustion interne de véhicules automobiles.

La présente invention concerne plus particulièrement un agencement d'un circuit de refroidissement de moteur à combustion interne.

La présente invention concerne un dispositif d'interfaces agencé dans un circuit d'eau de refroidissement de moteur.

### Etat de la technique

Les moteurs à combustion interne ou thermiques de véhicule automobile sont disposés dans un compartiment moteur dont le volume est de plus en plus restreint afin de permettre des évolutions esthétiques de la carrosserie du véhicule. Notamment, le porte-à-faux du véhicule c'est-à-dire la distance longitudinale entre l'avant dudit véhicule et l'axe du premier essieu, est réduit, ce qui entraine une réduction de l'espace entre un élément de refroidissement du groupe motopropulseur tel que le radiateur et ledit groupe motopropulseur, ledit espace étant cependant nécessaire pour l'aménagement de différents éléments du groupe motopropulseur qui permettent d'améliorer de nombreux aspects de la conduite du véhicule, notamment la puissance du moteur, la réduction de la pollution ou encore la fiabilité. De la même façon, le développement constant du downsizing permet au turbocompresseur de trouver d'autres applications.

L'espace disponible réduit impose de gérer de manière très stricte l'espace alloué à chaque élément du groupe motopropulseur.

Parmi lesdits éléments, on trouve un turbocompresseur qui permet d'améliorer le rendement du moteur et d'obtenir plus de puissance dudit moteur et une moindre consommation de carburant entrainant par ailleurs une moindre émission de polluants.

Dans un moteur suralimenté, le turbocompresseur comprime fortement l'air d'admission qui peut alors atteindre des températures élevées jusqu'à 200 °C. L'air de suralimentation chaud présente cependant de nombreux inconvénients : une combustion insuffisante en raison de sa faible densité, une formation accrue d'oxyde d'azote dans le moteur suite à la température de combustion plus élevée, des contraintes thermiques plus fortes entrainant par exemple des phénomènes parasites tels que le cliquetis des moteurs essence et des composants moteur. Pour pallier à ces problèmes, l'air de suralimentation est refroidi avant d'être envoyé dans la chambre de combustion.

Il existe deux systèmes de refroidissement de l'air de suralimentation.
- Un refroidissement direct :
   L'air de suralimentation est refroidi directement par l'air extérieur : à la sortie du compresseur, l'air de suralimentation est dirigé vers l'avant du véhicule où il traverse un radiateur à air et il est refroidi par l'air ambiant (vent relatif créé par le déplacement), avant de retourner au collecteur d'admission du moteur.
- Un refroidissement indirect :
   L'air de suralimentation est refroidi par le liquide de refroidissement qui, à son tour, est refroidi par l'air extérieur dans un circuit de refroidissement à basse température séparé. Le refroidisseur indirect est moins encombrant et peut être installé à proximité du moteur entre le compresseur et la vanne papillon. Par ailleurs, il a un meilleur impact sur la dynamique du véhicule que le refroidissement direct de l'air de suralimentation : les conduits d'air de suralimentation étant plus courts, la perte de charge est moins importante, ce qui permet d'augmenter la puissance et la réactivité du moteur. Le système de suralimentation dispose ainsi d'un refroidissement plus important et d'un circuit d'air raccourci, améliorant le temps de réponse du moteur lors d'une accélération. L'eau est ensuite refroidie par un radiateur de petit volume à l'avant du véhicule, et le débit assuré par une pompe électrique. Le refroidissement indirect est privilégié dans les véhicules automobiles.

Le refroidissement de l'air d'admission des moteurs suralimentés, essence ou diesel, est donc assuré par un échangeur air-eau, dans lequel l'air sortant du compresseur est refroidi par un circuit d'eau froide. Un circuit d'air est ainsi aménagé dans le compartiment moteur pour amener de l'air comprimé par le compresseur du turbocompresseur jusqu'à un échangeur air-eau disposé généralement à l'avant du véhicule à côté d'un radiateur. Selon certains aménagements du groupe motopropulseur, le moteur est disposé en position transversale par rapport à l'axe longitudinal médian du véhicule passant par les centres des essieux dudit véhicule, et le turbocompresseur est fixé à proximité du collecteur de gaz brulés par la combustion des mélanges carburant et air comprimé dans la chambre à combustion tourné vers l'arrière du véhicule. Ledit circuit d'air comprend ainsi un conduit d'amenée d'air depuis la partie arrière du compartiment moteur jusqu'à la partie avant dudit compartiment.

Lesdits éléments du groupe motopropulseur sont ainsi amenés à des très hautes températures lors de leur fonctionnement ce qui implique un refroidissement optimal de ces éléments.

Des circuits de refroidissements sont ainsi aménagés dans le compartiment. Ils comprennent un circuit de refroidissement par air et un circuit de refroidissement par eau. Lesdits circuits de refroidissement comprennent un radiateur pour un échange de chaleur eau-air et un échangeur de chaleur air-air ou « intercooler » en anglais. Un « intercooler » est un dispositif de refroidissement intégré aux moteurs à combustions et explosions équipés d'un turbocompresseur. L'intercooler permet d'abaisser la température de l'air d'admission à l'entrée du moteur pour permettre une suppression des effets négatifs du turbocompresseur et une augmentation de la puissance du moteur. De façon connue, le radiateur et l'intercooler sont disposés à l'avant du véhicule de manière préférentielle contre la face avant du compartiment moteur.

Toutefois, le compartiment moteur où sont disposés le moteur et tous les éléments nécessaires à son fonctionnement parmi lesquels les systèmes de refroidissement est de plus en plus réduit et adopte une forme ramassée pour des questions d'esthétique véhicule et de sécurité automobile. De ce fait, les circuits de refroidissement peuvent présenter des chemins complexes ce qui peut nuire à l'efficacité du refroidissement du moteur et donc à son fonctionnement.

La publication FR2800263-A1 divulgue un agencement destiné à relier un radiateur à fluide de refroidissement à un radiateur d'air d'admission ou de suralimentation, lesdits radiateurs sont montés parallèlement l'un à l'autre, le radiateur d'air de refroidissement étant fixé contre le radiateur à fluide de refroidissement grâce à un système de fixation comprenant des bras de fixation s'engageant entre des surfaces de butées. On appelle fixation en « sac à dos » d'un premier élément sur un deuxième élément une fixation du deuxième élément sur la surface la plus importante du premier élément. Un tel agencement entraine une fixation en « sac à dos » du radiateur d'air contre le radiateur à fluide de refroidisseur ce qui diminue de façon sensible l'espace dans le compartiment moteur pour le groupe motopropulseur.

La publication FR2800678-A1 présente un module de refroidissement pour moteur thermique de véhicule automobile, comportant un refroidisseur à réfrigérant et un refroidisseur d'air de suralimentation disposés parallèlement l'un à l'autre et étant équipé de pattes de fixation prévues latéralement pour le positionnement du module dans le véhicule, lesdites pattes de fixation et des pièces latérales du refroidisseur à réfrigérant étant reliées à des caissons du refroidisseur de suralimentation.

Un inconvénient est que les refroidisseurs sont disposés l'un contre l'autre en « sac à dos » ce qui réduit l'espace disponible dans le compartiment pour le groupe motopropulseur.

### Bref résumé de l'invention

Le but de l'invention est de remédier à ces problèmes et un des objets de l'invention est un agencement d'un refroidisseur de fluide réfrigérant et d'un refroidisseur de suralimentation fixé l'un à l'autre selon une arête du refroidisseur à fluide réfrigérant.

La présente invention concerne plus particulièrement un agencement d'un refroidisseur de fluide réfrigérant et d'un refroidisseur d'air de suralimentation de moteur à combustion interne de véhicule automobile de forme sensiblement parallélépipédique comprenant des faces latérales et disposés parallèlement l'un à l'autre, chacun des refroidisseurs comprenant au moins un connecteur d'entrée et un connecteur de sortie de fluide,

Caractérisé en ce que le connecteur du refroidisseur d'air de suralimentation s'étend transversalement vers une face latérale du refroidisseur de fluide réfrigérant pour participer à la fixation du refroidisseur d'air contre une face latérale du refroidisseur de fluide.

De manière avantageuse, le refroidisseur de suralimentation est disposé parallèlement au refroidisseur de fluide en face avant du véhicule et dans le prolongement transversal du refroidisseur de fluide, ce qui permet une réduction de l'encombrement longitudinal des refroidisseurs et une efficacité amélioré du refroidisseur de suralimentation. Le connecteur participe de plus à la fixation dudit refroidisseur de suralimentation contre une face latérale du refroidisseur de fluide, ce qui améliore davantage la liaison entre les deux éléments de refroidissement et peut permettre la diminution des points de fixation des deux éléments sur une paroi du compartiment moteur.

Selon d'autres caractéristiques de l'invention :
- le refroidisseur de fluide entoure au moins partiellement le connecteur du refroidisseur de suralimentation.

De manière avantageuse, le refroidisseur de fluide entoure au moins partiellement le connecteur pour permettre une amélioration de la liaison entre les deux refroidisseurs.
- le connecteur du refroidisseur d'air est reçu dans un conduit traversant transversalement le refroidisseur de fluide.

De manière avantageuse, le connecteur est reçu dans un conduit qui traverse transversalement le refroidisseur de fluide à une première extrémité latérale dudit refroidisseur de fluide pour être connecté à une extrémité opposée au circuit d'air de suralimentation, ce qui peut d'une part permettre un meilleur refroidissement de l'air de suralimentation et d'autre part d'obtenir une longueur de conduit d'air de suralimentation suffisante pour respecter une règle de fonctionnement imposée.
- le conduit est fixé au refroidisseur de fluide.

De manière avantageuse, le conduit est fixé au refroidisseur de fluide, ce qui permet de réduire l'encombrement des refroidisseurs et de simplifier le processus de montage, le conduit et le refroidisseur de fluide pouvant être livré assemblés en une pièce.
- le conduit est partie du refroidisseur de fluide.

De manière avantageuse, le conduit peut être partie du refroidisseur, formant une unique pièce afin de réduire de manière optimale l'encombrement des deux refroidisseurs et de simplifier le processus de montage, le refroidisseur de fluide peut comprendre un conduit traversant depuis une face latérale et débouchant dans la face latérale opposée pour améliorer sensiblement le refroidissement d'air de suralimentation.
- le conduit traversant est porté par une structure de fixation fixée au compartiment moteur.

De manière avantageuse, le conduit traversant peut être porté par une structure de fixation fixée à un élément de paroi du compartiment moteur.
- la structure de fixation porte le refroidisseur de fluide réfrigérant.

De manière avantageuse, la structure de fixation peut porter le refroidisseur de fluide pour permettre une simplification du processus de montage.
- la structure de fixation porte le refroidisseur de suralimentation.

De manière avantageuse, la structure de fixation peut porter le refroidisseur de suralimentation pour permettre une simplification du processus de montage.
- le connecteur est disposé en partie haute du refroidisseur de suralimentation disposé dans le compartiment moteur du véhicule.
- le connecteur est disposé en partie basse du refroidisseur de suralimentation disposé dans le compartiment moteur du véhicule.

De manière avantageuse, le connecteur est disposé en partie haute et en partie basse du refroidisseur de suralimentation disposé dans le compartiment moteur pour respecter les règles d'architecture de disposition de passage des conduits du circulation d'air de suralimentation.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
- la figure 1 représente une coupe longitudinale de l'avant d'un véhicule automobile.
- la figure 2 représente une vue schématique de face d'un refroidisseur de fluide et d'un refroidisseur d'air de suralimentation.
- la figure 3 représente une vue schématique de face d'un refroidisseur de fluide et d'un refroidisseur d'air de suralimentation avec une structure de fixation.
- la figure 4 représente une vue schématique de côté de coupe de la partie haute du refroidisseur de fluide.
- la figure 5 représente une vue schématique de côté de coupe de la partie haute du refroidisseur de fluide selon un autre mode de réalisation de l'invention.

### Description détaillée des figures

Dans la description qui va suivre, des chiffres de référence identiques désignent des pièces identiques ou ayant des fonctions similaires.

Les véhicules automobiles équipés de moteur thermique comprennent des systèmes de suralimentation pour augmenter la performance dudit moteur. Pour augmenter la puissance d'un moteur, il est connu d'agir sur le couple du moteur en augmentant la quantité de carburant et de comburant grâce à un dispositif de suralimentation. Celui-ci peut être un turbocompresseur ou un compresseur mécanique entraîné directement par le moteur. Ledit moteur est alors suralimenté. Cependant la masse d'air contenue dans un cylindre donné est proportionnelle à la pression et inversement proportionnelle à sa température absolue.

Lorsque l'air est mis sous pression, sa température augmente et sa densité est modifiée. Il est donc nécessaire de disposer un échangeur air/air ou échangeur air/eau de manière à refroidir l'air et ainsi augmenter sa densité pour atteindre le meilleur rendement d'un moteur à explosion.

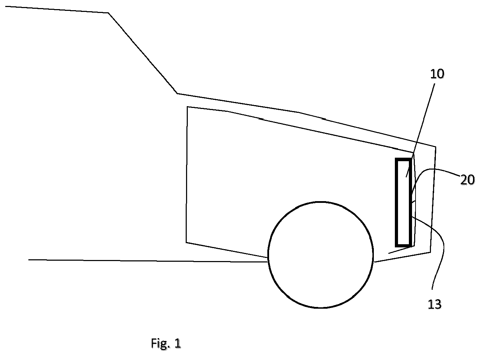

Un moteur suralimenté grâce à un turbocompresseur est de façon connue associé avec un refroidisseur d'air de suralimentation. Ledit moteur est également associé à un refroidisseur de fluide réfrigérant ou radiateur. Lesdits refroidisseurs sont généralement disposés dans un compartiment moteur contre la face avant du véhicule afin d'obtenir la meilleur échange de chaleur avec la circulation d'air ainsi que représenté dans la figure 1.

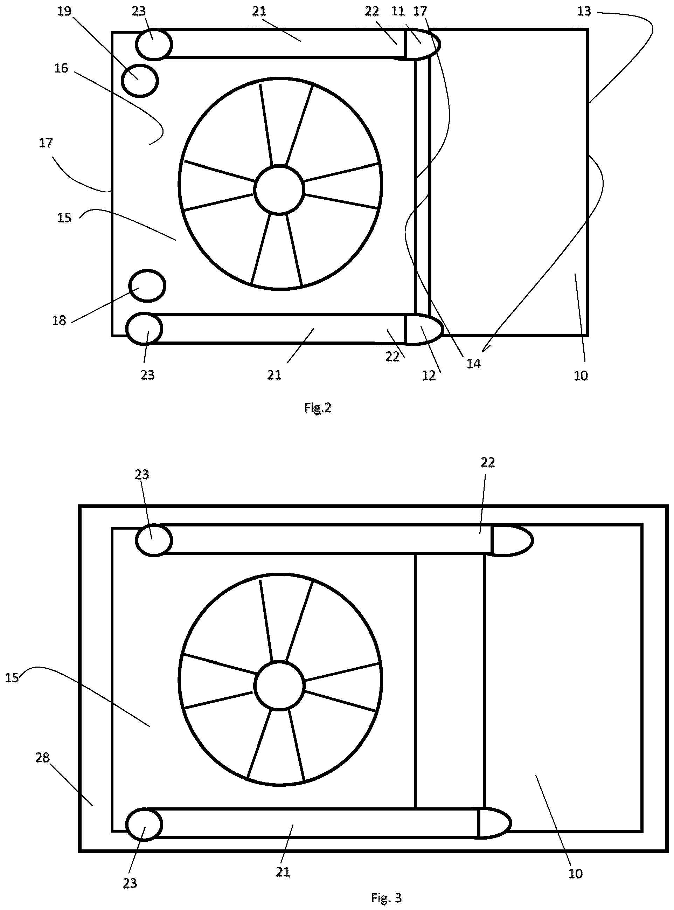

Selon les figures 2 et 3, le refroidisseur d'air de suralimentation 10 est disposé contre la paroi avant du compartiment moteur d'un véhicule automobile (non représenté). Ledit refroidisseur d'air suralimenté présente une forme sensiblement de parallélépipède présentant des parois frontales 13 verticales symétriquement opposées et des parois latérales verticales 14 orthogonales aux parois frontales verticales. Le refroidisseur de suralimentation est disposé dans le compartiment moteur de telle façon qu'une paroi frontale verticale est en vis-à-vis d'une paroi avant 20 verticale du compartiment moteur de la face avant du véhicule automobile. Ledit refroidisseur comprend un connecteur d'entrée 11 et un connecteur de sortie 12 pour être connecté à un circuit d'air de suralimentation.

Le refroidisseur de fluide réfrigérant 15 est également sensiblement de forme parallélépipédique et comporte présentant des parois frontales 16 verticales symétriquement opposées et des parois latérales verticales 17 orthogonales aux parois frontales verticales 16. De manière connue, le refroidisseur de fluide est disposé de façon à présenter une des deux faces verticales frontales en vis-à-vis avec la paroi verticale frontale 20 du compartiment moteur sur la face avant du véhicule. Ledit refroidisseur de fluide est disposé à côté du refroidisseur de suralimentation c'est-à-dire que le refroidisseur de fluide présente une paroi latérale verticale 17 en vis-à-vis avec une paroi latérale verticale 14 du refroidisseur de suralimentation 10. Le refroidisseur de fluide réfrigérant comprend également un connecteur d'entrée de fluide 18 et un connecteur de sortie 19 de fluide connectés à un circuit de refroidissement de fluide (non représenté) pour amener du fluide vers le moteur et améliorer le refroidissement dudit moteur en fonctionnement.

De manière préférentielle, le connecteur d'entrée 11 et le connecteur de sortie 12 du refroidisseur de suralimentation 10 présentent une forme tubulaire dont l'axe est sensiblement parallèle à la paroi frontale verticale 16 du refroidisseur de fluide et sensiblement orthogonal à la paroi latérale verticale 14 du refroidisseur de suralimentation 10. Lesdits connecteurs 11, 12 peuvent selon un mode de réalisation particulier déboucher directement et orthogonalement de la paroi latérale verticale 14.

Les connecteurs 11, 12 sont de manière préférentielle en plastique obtenus par moulage.

Selon la figure 2 ou 3, le refroidisseur de fluide comporte deux conduits de connexion 21 traversant transversalement ledit refroidisseur depuis une première paroi latérale verticale 17 à la seconde paroi verticale latérale 17 opposée. Les conduits sont de manière préférentielle sensiblement parallèles à la paroi verticale frontale 16 et orthogonaux à la paroi verticale latérale 17 et sont fixés audit refroidisseur de fluide par exemple par des moyens de fixation rapide (non représentés).

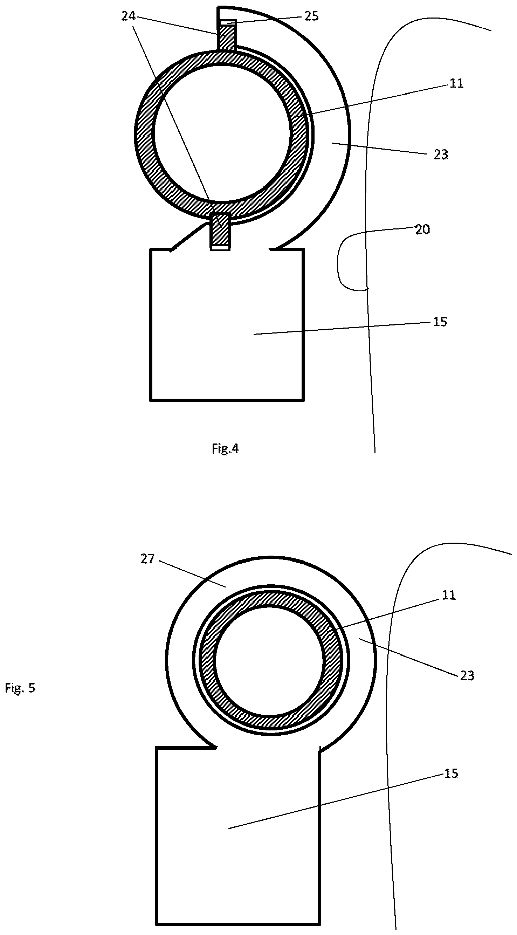

Le connecteur d'entrée et/ou de sortie 11, 12 du refroidisseur d'air de suralimentation 10 est reçu de façon étanche dans une première extrémité 22 du conduit connexion 21. Selon la figure 4 ou 5, représentant une coupe de la partie haute du refroidisseur de fluide réfrigérant 15 disposé dans le compartiment moteur du véhicule, selon un mode de réalisation de l'invention, le refroidisseur de fluide réfrigérant 15 entoure au moins partiellement le connecteur d'entrée/de sortie 11, 12 du refroidisseur d'air de suralimentation 10. La paroi du refroidisseur de fluide peut comprendre une portion de paroi courbe 23 pour entourer selon la figure 4 sensiblement une moitié du connecteur 11, 12 d'entrée/de sortie. Afin d'améliorer la disposition du connecteur vis-à-vis de la portion de paroi courbe 23, ledit connecteur 11,12 peut comprendre deux pattes radiales 24 reçues dans deux rainures 25 creusées dans ladite portion courbe. Ladite paroi selon un autre mode de réalisation peut comprendre une expansion annulaire 27 traversée par le connecteur 11,12 d'entrée/de sortie.

L'extrémité opposée 23 du conduit de connexion 21 est connectée au circuit d'air de suralimentation pour amener de l'air vers le turbocompresseur et ramener des gaz chauds vers le refroidisseur de suralimentation. La longueur des conduits de connexion 21 et du circuit d'air jusqu'au turbocompresseur (non représenté) peut alors être suffisante pour respecter les règles d'architecture des conduits de gaz et d'air pour un moteur thermique turbocompressé.

Selon la figure 2, le conduit de connexion 21 est porté par une structure de fixation 28 fixée à un élément de paroi du compartiment moteur (non représenté). Ladite structure de fixation peut également porter le refroidisseur de fluide réfrigérant 15, ce qui permet de réduire de manière avantageuse le nombre de points de fixation des différents éléments de refroidissement. Ladite structure de fixation peut également porter le refroidisseur d'air de suralimentation 10 pour optimiser l'encombrement des éléments de refroidissement 10, 15 et le montage desdits éléments. En effet, de cette manière, les refroidisseurs 10, 15 ainsi que les conduits de connexion 21 peuvent être assemblés sur ladite structure avant d'être montés dans le compartiment moteur 30. La structure de fixation 28 peut comporter un nombre réduit de points de fixation sur un élément de paroi du compartiment moteur 30, ce qui permet d'optimiser le processus de montage.

Selon un mode de réalisation non représenté, les conduits de connexion 21 peuvent s'étendre transversalement à l'intérieur du refroidisseur de fluide réfrigérant 15 afin d'optimiser le parcours desdits conduits 21 et le refroidissement de l'air de suralimentation. De manière préférentielle, lesdits conduits 21 sont obtenus avec le refroidisseur de fluide réfrigérant 15 d'une seule pièce par emboutissage et soudage.

Comme il va de soi, l'invention ne se limite pas aux seules formes d'exécution de cette prise, décrites ci-dessus à titre d'exemples, elle en embrasse au contraire toutes les variantes. C'est ainsi notamment que le conduit de connexion peut s'étendre au-delà de la limite paroi latérale verticale du refroidisseur de fluide réfrigérant 15 pour être connecté au plus près du refroidisseur d'air de suralimentation 10. Selon ce mode de réalisation, la paroi courbe 23 du refroidisseur de fluide réfrigérant 15 entoure de ce fait le conduit de connexion. De manière générale, ladite paroi courbe 23 entoure un élément de connexion comprenant le connecteur d'entrée/de sortie du refroidisseur d'air suralimenté 10 et le conduit de connexion traversant 21.

## Revendications

1. Agencement d'un refroidisseur de fluide réfrigérant (15) et d'un refroidisseur d'air de suralimentation (10) de moteur à combustion interne de véhicule automobile de forme sensiblement parallélépipédique disposés parallèlement l'un à l'autre selon une face latérale verticale (14,17), chacun des refroidisseurs (10, 15) comprenant au moins un connecteur d'entrée (11, 19) et un connecteur de sortie de fluide (12, 18),
**Caractérisé en ce que** le connecteur (11,12) du refroidisseur d'air de suralimentation (10) s'étend transversalement vers une face latérale verticale (17) du refroidisseur de fluide réfrigérant pour participer à la fixation du refroidisseur d'air de suralimentation (10) contre le refroidisseur de fluide (15).

2. Agencement selon la revendication 1, **caractérisé en ce que** le connecteur (11, 12) du refroidisseur d'air (10) est reçu dans un conduit de connexion traversant (21) transversalement le refroidisseur de fluide (15).

3. Agencement selon la revendication 2, **caractérisé en ce que** le refroidisseur de fluide (15) entoure au moins partiellement un élément de connexion comportant le connecteur (11,12) du refroidisseur de suralimentation (10) et le conduit de connexion traversant (21).

4. Agencement selon la revendication 3, **caractérisé en ce que** le conduit de connexion (21) est fixé au refroidisseur de fluide (15).

5. Agencement selon la revendication 3 ou 4, **caractérisé en ce que** le conduit de connexion (21) est partie du refroidisseur de fluide (15).

6. Agencement selon l'une quelconque des revendications 3 à 5, **caractérisé en ce que** le conduit de connexion traversant (21) est porté par une structure de fixation (28) fixée au compartiment moteur.

7. Agencement selon la revendication 6, **caractérisé en ce que** la structure de fixation (28) porte le refroidisseur de fluide réfrigérant (15).

8. Agencement selon la revendication 6 ou 7, **caractérisé en ce que** la structure de fixation (28) porte le refroidisseur de suralimentation (10).

9. Agencement selon l'une quelconque des revendications 1 à 8, **caractérisé en ce que** le connecteur (11) du refroidisseur de suralimentation (10) est disposé en partie haute du refroidisseur de suralimentation (10) disposé dans le compartiment moteur du véhicule.

10. Agencement selon l'une quelconque des revendications 1 à 9, **caractérisé en ce que** le connecteur (12) du refroidisseur de suralimentation (10) est disposé en partie basse du refroidisseur de suralimentation (10) disposé dans le compartiment moteur du véhicule.

11. Véhicule automobile comportant un moteur thermique suralimenté comportant un refroidisseur de fluide réfrigérant (15) et un refroidisseur de suralimentation (10) agencés selon l'une quelconque des revendications 1 à 10.
